# EUROPEAN PATENT SPECIFICATION

(11) **EP 1 263 195 B1**
(45) Date of publication and mention of the grant of the patent: **21.04.2004**
(21) Application number: 01113408.7
(22) Date of filing: 01.06.2001
(51) Int. Cl.: H04M 1/23, H01H 13/70

(54) **Keypad system**
Tastatursystem
Système de clavier numérique

(43) Date of publication of application: 04.12.2002
(73) Proprietor: SIEMENS AKTIENGESELLSCHAFT, 80333 München (DE)
(72) Inventor: Kaelbling, Michael, Dr., 81739 München (DE)

(56) References cited:
- EP-A- 0 685 953
- WO-A-97/04472
- WO-A-98/40997

## Description

The present invention relates to improvements in keypads and to a method for improved data entry in keypads. The invention applies more particularly to the accurate selection of characters or operations on small keypads, for example the keypads on mobile telephone handsets or television remote controllers.

Mobile telephone handsets are made small and light so that they are portable and convenient to carry on the user's person. A keypad for a mobile telephone typically has between twelve and twenty buttons, or keys, for controlling the operation of the telephone. The keys generally include: number keys, "0" - "9"; telephony keys, "*" and "#"; and keys for additional functions including "phonebook", "menu", "info", "off-hook", "on-hook", "cancel", "option up", "option down" and "select".

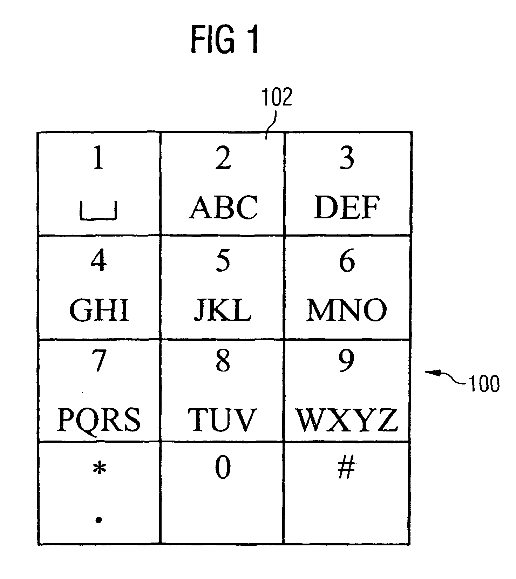

Current models of mobile telephone are so feature-packed that the limited number of keys are typically associated with several functions and/or meanings. The number keys are conventionally made to operate as an alphanumeric keypad. Notably, there is an International Standards Organisation (ISO) Standard according to which the number keys are associated with certain groups of three or four consecutive letters of the alphabet: ISO/IEC 9995-8:1994 and ITU-T Recommendation E.161 Option A. The ISO Standard keypad arrangement is illustrated at Figure 1.

According to the ISO Standard, the "2"-key is associated with the letters "A","B" or "C", in addition to the "2" character. Likewise the "3"-key is associated with "DEF" and so on until the "9" key with "WXYZ". The "1" key is generally associated with a space/blank and the "0" key is often associated with special symbols. The ISO Standard requires that the keys be arranged in four rows of three keys. In addition to the number keys the ISO Standard has telephony keys "*" and "#". A known, and natural, extension of the ISO Standard is to further incorporate characters belonging to languages other than English: in German, for example, accented characters (ä, ö and ü) and the "β" can each be associated with an appropriate number key.

A similar standard was adopted in telephone exchanges in the United States of America and elsewhere, so that each telephone exchange was given a mnemonic: "Hudson-6", for example, would correspond to an exchange with the number "486", as the first two letters ("H" and "U") map to "4" and "8" respectively. While the system of telephone exchange mnemonics has fallen into disuse, companies in the United States still pick telephone numbers with mnemonics based on this convention; for example, "1-800-ALL-MACS" is the toll-free number for The Mac Warehouse [RTM]. As a result of the use of mnemonics and the more recent introduction of the ISO Standard, manufacturers of telephone apparatus often print the three- or four-letter groups on or by the corresponding key to simplify the dialling process.

Mnemonics are merely methods of memorising otherwise meaningless sequences of numbers, when the user dials the "A" of ALL-MACS he is actually dialling a "2", which is what he wants. A more interesting situation arises when one dials the "2" in order to represent either the "2" character itself or any one of the other associated characters "A","B" or "C". Mobile telephones are conventionally provided with keys marked with the three- or four-letter groups in accordance with the ISO Standard. Furthermore, typical mobile telephones store numbers in "phonebooks" and allow the user to enter a short name or mnemonic to speed retrieval (or identify a caller). In retrieving a phonebook entry, the user can often "dial" the first letter of an entry by pressing the number key corresponding to the desired letter.

The three- or four-letter groups and the special characters have gained added meaning with the advent of Short Message Service (SMS). SMS allows users to compose brief textual messages for delivery via the mobile telephone network. Typically, characters are selected by repeatedly pressing the associated number key and cycling through the choices until a pause (or selection of another key) by the user indicates a choice has been made. This scheme is known as multi-press input.

An alternative to multi-press input is the so-called two key input scheme. At the first key press a specific letter group is selected and the key press immediately following that will relate to the place of the desired letter in the group. Thus first pressing "5" for J, K or L and then pressing "2" will result in the input of a "K".

In either of the above schemes, the keypad is generally provided with a default timeout period so that a pause in input longer than the timeout period will interpreted as a confirmation of the most recent key press by default. Confirmation of an initial input by selection of a further, different, key (including a dedicated confirmation key) is also possible under the multi-press input scheme.

A variation on the multi-press input principle appears in the T9 text entry scheme as disclosed in US Patent Publication No. 5,818,437. Under T9, the user types just once on each numerical key corresponding to the group of letters containing the desired letter until the word is complete. A processor within the mobile handset accesses a dictionary of complete words and suggests a list of possible complete words corresponding to the numerical sequence entered. In the T9 scheme the confirmation of the data to be entered is rendered word by word rather than letter by letter.

Certain mobile telephones implement the data entry schemes by providing data entry keys to permit selection of a particular character and a separate confirmation key to confirm that selection. Under T9, this means that the numerical key board is used to type a complete word and a separate selection key is used to cycle through each of the possible complete words.

Key surfaces are restricted in area and dimension in order to comply with actual or *de facto* standard key arrangements. In addition, the length, breadth and depth of key surfaces are limited by a general need to keep overall size to a minimum in order to enhance portability. However, the smaller the keys are, the harder they are to press accurately, especially for users with large or insensitive fingers or with impaired fine motor coordination. In colder climates, the wearing of gloves can render fingers less sensitive to the keys. The loss of accuracy due to reduced key size can mean that the user may unintentionally push a neighbouring key. To compound the problem, the small typefaces that must be used to label the keys can be hard to read in certain circumstances: for example under low light conditions, for users with impaired vision or even with fogged glasses. A further problem can arise when labels are blocked from view (as they might be in some mobile telephone holsters) or worn away; even with perfect eyesight a user can be hard-pressed to perform accurate keying operations under such conditions.

The problem of making a keypad device small while ensuring accurate operation has previously been addressed in a number of ways. Some devices provide a stylus with which to press miniature keys; effectively providing a small finger for a small key. Styli are often used in conjunction with portable digital assistants (PDAs). Generally the PDA has a touch sensitive display which the user may interact with by means of a stylus. The keypad may itself be rendered as a touch sensitive portion of a touch sensitive display thereby dispensing with the need for a physical keypad. Naturally, a touch sensitive display can be accessed by the user directly with his finger in the absence of a stylus.

Other devices provide auxiliary voice input where speech recognition is used to select characters by name. Indeed speech recognition can render use of a keypad all but redundant.

Still other devices provide audible feedback, for instance: a click indicating that a key has been pressed; a tone having a unique pitch, which the user could theoretically identify with accuracy; or a voice playback which repeats the character selected in an artificial voice. Naturally many electronic devices are already provided with audio feedback devices for other reasons: for example, the loudspeaker unit of a mobile telephone is used to convert received electronic signals so that a remote caller's voice can be heard. Audible feedback may thus be provided through a pre-existing audio feedback device.

The known solutions described above have all been applied to fixed telephone equipment, portable digital assistants (PDAs) and mobile telephone handsets.

It is known to allow data entry and feedback in the form of tactile feedback. A particular example of a device with tactile feedback is the Braillex [RTM] terminal, whereby the user places fingers over a feedback area and portions of the feedback area are dynamically raised and lowered to represent Braille characters.

Unlike old rotary dial phones, many conventional telephone devices now include visual feedback indicating the character or number selected. Visual feedback devices include liquid crystal display devices, light emitting diode arrangements, and cathode ray tubes.

Where the keypad device is a remote controller for a cathode ray tube (CRT) device, for example, a television (TV), an alternative visual feedback scheme is generally adopted. Visual feedback is generally displayed as on-screen display (OSD) information on the CRT screen.

Many devices with pixel graphic displays use as large a font size as possible to improve readability of the input character string while keeping the character string to a single line: this is particularly prevalent in mobile telephone displays where the character string is a telephone number, for example. Access to visual feedback is also partially addressed by supplying internal light sources to enhance the visibility of selected characters.

When the size and weight of the keypad device are less critical it is acceptable to address the accessibility problem by making keys and labels larger, thereby intentionally sacrificing smaller form factor for increased accessibility. However when it is necessary to make a keypad device small while still ensuring accurate operation by users the above solutions have certain disadvantages.
Firstly, the input schemes described above are made considerably more difficult and less accurate when conventional keys are simply reduced in size. Secondly, voice activation and touch sensitive displays require a greater portion of data processing power than simple keystrokes. Thirdly, internal light sources add expense and weight and furthermore consume a significant amount of power. In portable devices one severely limiting factor is battery life; both additional data processing and back-lighting draw more heavily on battery power than would be the case in their absence.
Compensating for increased power consumption with increased battery capacity generally results in an increase in weight of the device.

International application WO 97 04472 A discloses a keyboard having keys for inputting characters, wherein a key is arranged to produce a character in response to the press of the key once. The key has a main contact and at least one edge contact.

It is therefore an object of the invention to obviate or at least mitigate the aforementioned problems.

In accordance with one aspect of the present invention, there is provided a keypad system comprising a feedback device and a keypad device, the keypad device including a keypad, the keypad comprising at least one key which is operable to bring the keypad device into a user presentation mode, whereby a feedback device presents a group of data entry options for consideration by a user; and a selection mode, whereby one option is selected from among the group of data entry options, the selected option corresponding to a realisable data entry,
the keypad system characterised in that said at least one key is operable between at least three distinct positions and in that:
when said key is in a first position, the keypad system enters user presentation mode, and when the key is in a second position, the keypad system enters selection mode and as a result the feedback device presents the realisable data entry.

The feedback device may be integral with the keypad device. Alternatively the feedback device may be external to the keypad device.

The feedback device advantageously includes a display device. The display device may be a liquid crystal display device. Alternatively the display device may be a cathode ray tube having a screen, feedback being displayed on the screen.

Additionally or alternatively the feedback device may include an audio feedback device.

The keypad preferably comprises a plurality of keys, each of the plurality of keys being operable between at least three distinct positions.

The or each key may be operable in a direction substantially in the plane of the keypad.
Alternatively the or each key is operable in a direction substantially orthogonal to the plane of the keypad. The or each key is preferably a three position, momentary contact switch.

The selection mode preferably further includes highlighting a current option from among the group of data entry options. The current option highlighted when the keypad system is in user presentation mode may then become the realisable option selected upon entry into selection mode.

The keypad may be implemented as a keypad portion of a touch sensitive display.

In a further aspect of the present invention, there is provided a method for data entry in keypads having at least one key, the method comprising: a user presentation step in which a group of data entry options are presented for consideration by a user; and a selection step in which an option is thereby selected from among the group of data entry options, the selected option corresponding to a certain data entry, the method characterised in that said at least one key is moveable between at least three distinct positions and in that: when the switch is in a first position, the keypad device enters the user presentation step, and when the switch is in a second position, the keypad device enters the selection step.

Thus the problems described above are approached by separating character selection into a user presentation step and a selection step, each step being associated with useful user feedback, and further providing the user with a convenient method of switching between those steps. The separation of character selection steps allows further reduction in keypad form factor without significant reduction in user accessibility.

An advantage of the above approach is that user feedback can be optimised for each step (user presentation and selection) separately resulting in better overall performance. The group of options presented to the user at the user presentation step can be displayed across the whole display to enhance visibility and once a highlighted option has been accepted the selection step can be displayed as the current accepted option along with previously accepted options, allowing the display of a whole line of accepted text. Having different optimised user feedback information for each step improves usefulness. Operation is possible using only one hand. Device size can be reduced as small keys can be still used effectively and efficiently by a larger portion of the user population. Due to the two-step method, variations in the size of the fingers of individual members of the user population has a less critical effect upon successful operation than simple scaling down of the key size.
Furthermore the speed of operation of keypads is enhanced by the provision of a convenient method for switching between the two steps.

The method for the identification and selection of characters (or operations) can be applied in a convenient and useful manner to devices including mobile telephones, fixed telephones and television remote control devices.

For a better understanding of the present invention, reference will now be made, by way of example only, to the figures provided on the accompanying drawing sheets in which:-
- Figure 1: shows the keypad arrangement in accordance with ISO Standard ISO/IEC 9995-8:1994;
- Figure 2: shows an embodiment of a multiple position switch;
- Figures 3A to 3J: show an example of an input sequence of numbers;
- Figures 4A to 4D: show an example of an input sequence for a letter in the creation of a text message.
- Figures 5A and 5B: show a mobile telephone having a keypad in which each key is a three position momentary-contact switch.
- Figure 6: shows a TV remote control system where each key on the remote controller keypad is a three position momentary-contact switch.
- Figure 7: shows a keypad implemented as a part of a touch sensitive display.

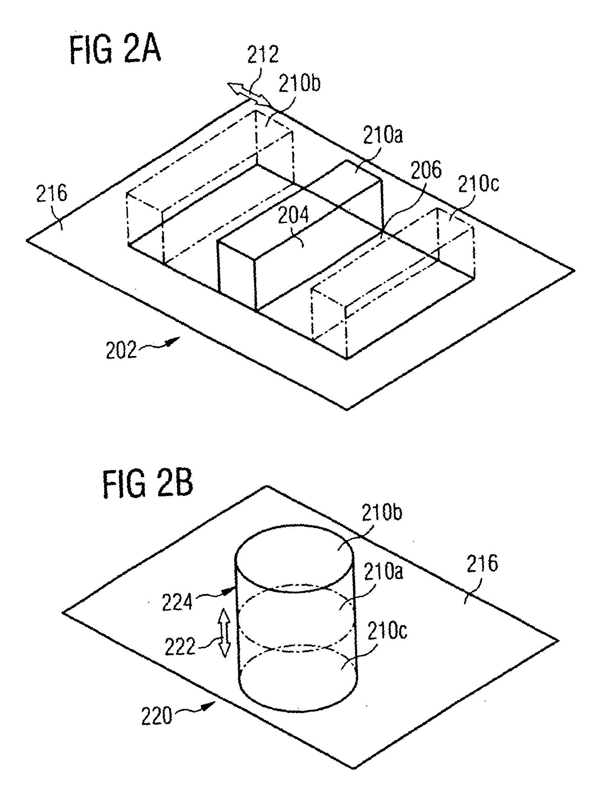

One feature of the keypad system described above is the multiple position switch. One such switch is shown in Figure 2A.

A further example of an appropriate switch, in this case a three-position, momentary-contact switch, is shown in Figure 2B.

In addition to an "up" position 210b and a "down" position 210c, an appropriate three-position switch has a defined "intermediate" position 210a. Such three-position switches are known from the shutter-releases on modern cameras: in the "up" position the camera is inactive; when depressed to the "intermediate" position, the camera sets the focus, shutter speed and/or aperture size; when depressed further, into the "down" position, the picture is taken. The association between "up", "intermediate" and "down" on the one hand and inactivity, consideration and confirmation on the other in the following discussion is maintained for simplicity only. A switch having at least three distinct positions can equally easily have operations assigned to the distinct positions in any permutation.

A key 202,220 is said to be depressed when the switch 204,224 is in either the "intermediate" position 210a or the "down" position 210c. Likewise a key 202,220 which has been depressed is said to be released when the key 202,220 returns to the "up" position 210b. The key 202,220 may be biased with a spring to return the key to the "up" position 210b in the absence of pressure upon the key.

The switch 204,224 is also movable directly from the "up" position 210b to the "down" position 210c so that a user may simultaneously select and accept a particular key press without stopping at the "intermediate" position 210a. This so-called rapid input, without the normal "intermediate" position 210a, is caused by depressing the key from "up" to "down" in less than a predetermined time t, an appropriate time being, say, 0.1 seconds.

There are thus (at least) three distinct states that can be sensed during activation. In the discussion which follows the multiple position switch is assumed to be a three position switch unless stated otherwise. Appropriate multiple position switches are not restricted to movement in a linear direction. In addition to "vertical" and "horizontal" paths, a switch which moved in a non-linear path between positions could equally fulfil the functionality required; examples of non-linear paths include circular, arcuate, "knight's move" paths - each of which might be more ergonomic, and therefore more convenient for operation by fingers, thumbs or styli. Clearly switches having more than three distinct positions can be arranged to fulfil the functions of a three position switch.

The specific examples of appropriate switches 202,220 shown in Figures 2A and 2B are physically distinct. The switch 202 in Figure 2A is moveable in the plane of the keypad 216, whereas the switch 220 in Figure 2B is moveable substantially at right angles to the plane of the keypad 216. The horizontal operation of the switch 202 in Figure 2A may be more acceptable than the vertical operation of the switch 220 in Figure 2B under certain circumstances. Horizontal switches may allow an overall reduction in the depth, or "vertical" dimension, of keypads.

Multiple position switches can further be implemented as, for example: piezoelectric switches, whereby the force of a key press can be measured and different degrees of pressure can be interpreted as different "positions"; switches using optical sensors, where the user's gestures or finger movements can be interpreted as different "positions"; even switches using ultrasonic sensors which can measure distance between a finger and the sensor, the range of distances then being parcelled into zones so that each zone can then be associated with a different "position". The switches may also be covered by a plastic film for easy cleaning; a desirable feature in particularly sterile (or dirty) environments, such as hospitals.

A further feature of the above keypad system is the provision of a means of user feedback that can be optimised for each step distinctly. Examples of appropriate user feedback apparatus include: bitmap graphic displays, for instance liquid crystal (LCD) and light emitting diode (LED) displays; raster graphic devices, as instanced in analog or digital TV monitors; and audio feedback apparatus which generates speech/tone feedback.

The majority of electronic keypad devices have some form of controller for managing the display in response to the positions adopted by the switch, devices implemented in accordance with the present invention are no exception. In many applications a microcontroller will be sufficient, however a microprocessor may also be used for this purpose.

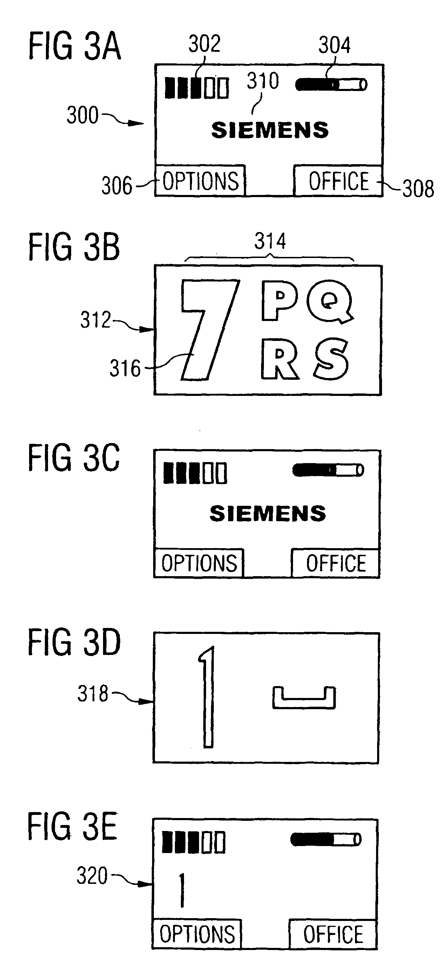

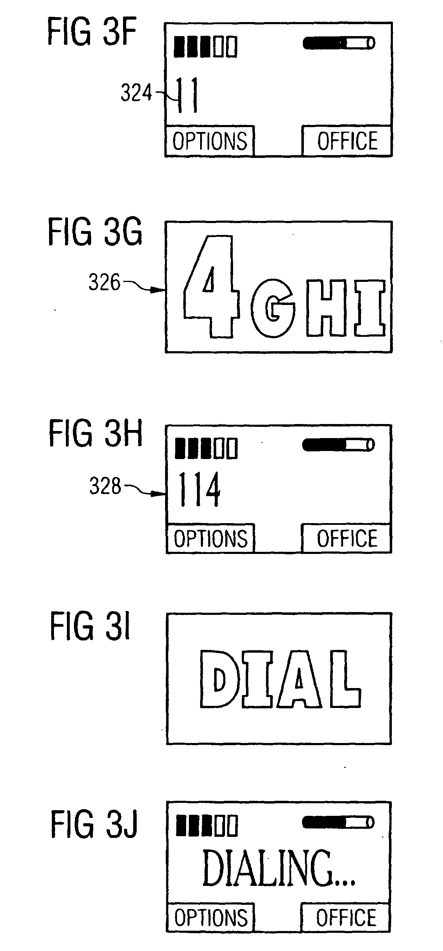

In Figures 3A to 3J, an example is given of an input sequence of numbers in a mobile telephone having a keypad and a graphic display. The Figures show the contents of the display at successive stages in the input sequence.

In this example each key on the mobile telephone keypad is implemented as a three-position, momentary-contact switch. The graphic display is used is a conventional liquid crystal display. For simplicity, but without loss of generality, it has been assumed that at most one key may be depressed at any given time. When no keys are depressed the display may show overview information, as it does in Figure 3A. The overview information comprises signal strength 302, battery power 304, on-screen menu captions 306,308 and service provider 310.

When a key is in the "intermediate" position 210a, all or part of whatever is currently displayed may be replaced by a clear, visually distinct representation 312 corresponding to the key pressed, "7" in this case (see Figure 3B). The representation 312 shows a group of data entry options 314 associated with the "7" key, one of which, the "7" character 316, is currently highlighted.

If the key is released from the "intermediate" position 210a, this may be interpreted as the character being rejected and the display may then return to displaying overview information (see Figure 3C).

In Figure 3D, the "1" key is depressed into the "intermediate" position 210a. The display is again adjusted to present a clear, visually distinct representation 318 corresponding to the "1" key. If the key were further depressed into the "down" position 210c, the user would commit to that selection, the character would be accepted and would appear as an acceptable character on the display 320 (Figure 3E shows this sequence of events).

Rapid input of a further "1" is shown in Figure 3F. The "1" key is rapidly or confidently depressed and a distinct representation of the options associated with the "1" key need not be displayed. The "1" is selected and input simultaneously and thus appears on the display as an accepted character 324.

Figures 3G and 3H show the display as the number "4" is selected 326 and accepted 328.

In Figure 3I, the mobile telephone's DIAL key is operated and in Figure 3J the mobile telephone indicates that the telephone is now dialling the accepted number "114".

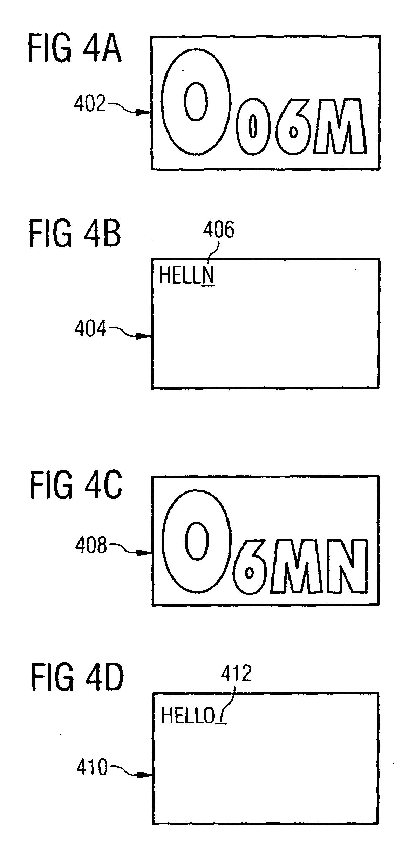

Figures 4A through 4D show a portion of an SMS message composition sequence in which the "O" of "HELLO" is selected and accepted.

In text entry, the user is more likely to need to select an alphabetic character. Here the separation of the user presentation step from the selection step allows the user to cycle through the options for the currently depressed key and then confirm a selection with a further key press. Multi-press input is particularly suitable for cycling through options. However with a multiple position switch it is also possible to associate one option with each of a plurality of intermediate positions: in the current example, the "6" key may be implemented as a six position switch, with one "up" position, one "down" position and four "intermediate" positions associated with the characters "6", "M", "N" and "O" respectively. An example of such a switch is described in greater detail in co-pending European Patent Application with Agent's docket number 2001P02562/EP. Although not shown in the Figure, it is also possible that the further key press to confirm the selection is actually a key press on a dedicated confirm key.

In Figure 4A, the "6" key has been placed in the "intermediate" position 210a and the display shows the group of possible data entry options one of which, "N", is currently highlighted 402.

The display then shows the result of this tentative data entry 404 (see Figure 4B). The cursor remains under the current character to indicate that the selection is tentative 406.

Rather than confirm the selection of "N" the user has moved one step through the cycle of options to highlight "O" 408 (see Figure 4C). Moving through the options may be performed according to the multi-press input scheme as described above whereby repeated pressing of the current key into the "intermediate" position 210a corresponds to the repeated key presses in multi-press input on conventional devices.

Finally in Figure 4D, the highlighted "O" is accepted by the user. The display now shows that the cursor has moved one character to the right 410.

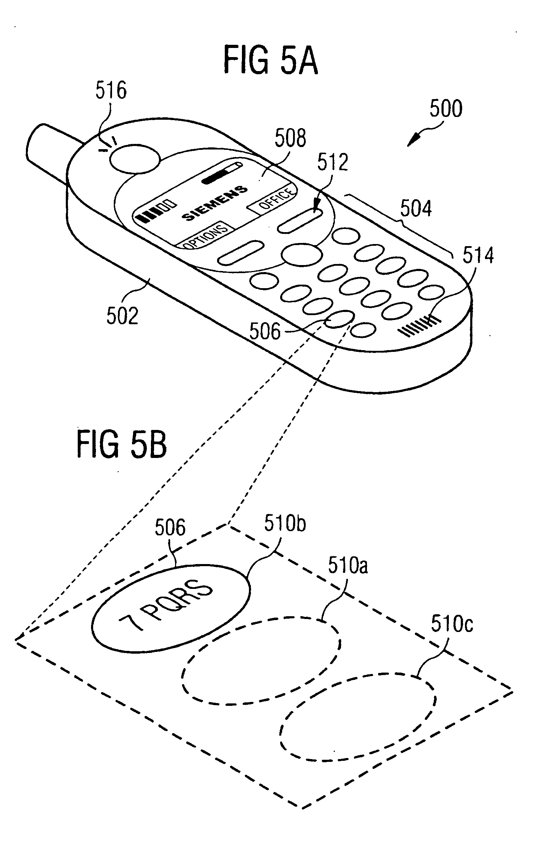

Figure 5A shows an embodiment of the present invention in the keypad of a mobile telephone 502. The mobile telephone 502 is provided with a keypad 504, an integral display device 508 and additional function keys 512. The integral display device 508 shown is a liquid crystal display (LCD) device but could equally have been implemented as an array of light emitting diodes, as an electroluminescent film or even as a mechanical display. LCD devices are difficult to see under low light conditions, for this reason they are often provided with backlighting.

Each of the keys 506 on the keypad 504 is of the horizontal slide variety illustrated in Figure 2A. It will be understood that the keys could just as easily be implemented in the vertical arrangement shown in Figure 2B. The "7" key is shown in the "up" position 510b in Figure 5B. "Up" position 510b, "intermediate" position 510a and "down" position 510c are analogous to the like named positions in Figure 2A; 210b, 210a and 210c respectively.

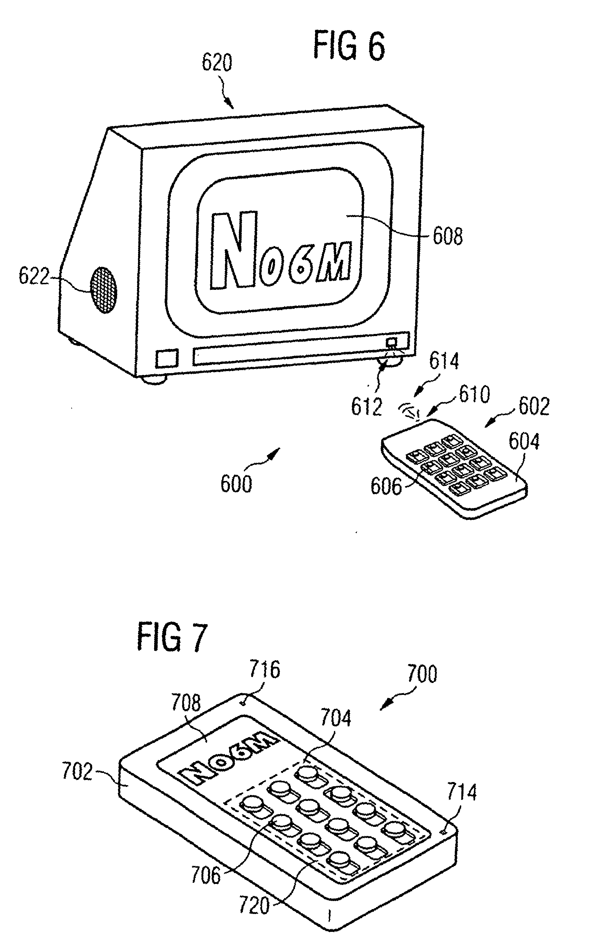

Figure 6 illustrates a further embodiment of the invention in a TV remote control system 600. The TV remote control system 600 comprises a TV remote controller 602 and a TV set 620, having a TV infrared port 612. The TV remote controller 602 is provided with a keypad 604 and a infrared port 610. Data may be transmitted over an infrared link 614 between the infrared ports on the controller and on the TV set 610,612. Characters may be displayed for selection using the on-screen display (OSD) facility 608 of the TV set 620. Each key of the remote controller keypad 604 is a three position momentary-contact switch as illustrated in Figure 2A.

Remote controls for consumer electronics devices, including televisions and radios, typically have no display, due to constraints upon cost, size, weight and/or power. Furthermore, televisions are themselves graphic display devices. Accordingly it is practical to use a CRT, (for example, a TV) as the display device for the display of overview information, data entry options and accepted entries, and to provide a separate remote control with three-position, momentary-contact switches, through which the user may interact with the display. More codes must be generated by the three-position switches in the separate remote control to represent the increased number of possible keypad states. If however the "intermediate position" codes were placed outside the range of the standard remote controls, then the new devices could still be used with old televisions (without added functionality) and old remotes could be used with new televisions without complication (again without triggering the added functionality). Radio sets with remote controllers could be adapted to give user feedback in audible form.

It is known to implement electronic devices such as PDAs and mobile telephones in modular form. The PDA itself may comprise a number of modules including a PDA processing module, a keypad module and a display module. Such a PDA can then be made to function as a mobile telephone by connecting the keypad and display modules to a telephone module, the keypad doubling as a keypad for the mobile telephone and the display serving both PDA processing and telephone modules.

Keypad devices suitable for implementing the present invention may thus be integral parts of larger electronic devices, external electronic devices in their own right or they may be keypad modules which are removably connected to modular electronic devices in order to provide keypad functions. Keypad modules may further be capable of remote operation when not docked with modular electronic devices.

It is not necessary to implement the inventive method with physical multiple position switches, instead software can be used. Figure 7 shows a keypad 704 implemented as a part of a touch sensitive display 702. Multiple position switches 706 are represented in the keypad portion 704 of the touch sensitive display 702. The display of data entry options and accepted data entries takes place in a presentation portion 708 of the touch sensitive display 702.

As can be seen, keypad devices themselves can take many forms. Further examples of keypad devices and switch arrangements thereon may be found in co-pending European Patent Application EP-A-1 271 900. In particular, said co-pending application discloses a keypad device provided with at least one first multiple position switch for selecting groups of data entries and highlighting one entry in particular and a second dedicated confirmation key. The first multiple position switch is arranged to have positions which correspond to different groups of data entry options. Furthermore, the first multiple position switch moves along a non-linear path - an arc - between a plurality of positions.

## Claims

1. A keypad system (500;600;700) comprising a feedback device (508,516;608,622;708,716) and a keypad device (502;602;702), the keypad device including a keypad (504;604;704), the keypad (504;604;704) comprising at least one key (506;606;706) which is operable to bring the keypad device (502;602;702) into a user presentation mode (312,318,326;402,408), whereby a feedback device presents a group of data entry options (314) for consideration by a user; and a selection mode (320,328;404,410), whereby one option (324) is selected from among the group of data entry options, the selected option corresponding to a realisable data entry,
the keypad system (500;600;700) **characterised in that** said at least one key is operable between at least three distinct positions and **in that**:
when said key (506;606;706) is in a first position, the keypad system (500;600;700) enters user presentation mode (312,318,326;402,408), and when the key is in a second position, the keypad system enters selection mode (320,328;404,410) and as a result the feedback device presents the realisable data entry.

2. A keypad system according to Claim 1, wherein the feedback device (508,516;708,716) is integral with the keypad device (502;702).

3. A keypad system according to Claim 1, wherein the feedback device (608,622) is external to the keypad device (602).

4. A keypad system according to any one of Claims 1, 2 or 3, wherein the feedback device includes a display device (508;608;708).

5. A keypad system according to Claim 4, wherein the display device is a liquid crystal display device (508;708).

6. A keypad system according to Claim 4, wherein the display device is a cathode ray tube (620) having a screen and feedback is displayed on the screen (608).

7. A keypad system according to any one of the preceding claims, wherein the feedback device includes an audio feedback device (516;622;716).

8. A keypad system according to Claim 1, wherein the keypad comprises a plurality of keys, each of the plurality of keys being operable between at least three distinct positions.

9. A keypad system according to any one of the preceding claims, wherein the or each key is operable in a direction substantially in the plane of the keypad.

10. A keypad system according to any one of claims 1 to 8, wherein the or each key is operable in a direction substantially orthogonal to the plane of the keypad.

11. A keypad system according to any one of the preceding claims, wherein the or each key is a three position, momentary contact switch.

12. A keypad system according to any one of the preceding claims, wherein the selection mode further includes highlighting a current option from among the group of data entry options.

13. A keypad system according to Claim 12, wherein the current option highlighted when the keypad system is in user presentation mode becomes the realisable option selected upon entry into selection mode.

14. A keypad system according to any one of the preceding claims, wherein the keypad is implemented as a keypad portion of a touch sensitive display.

15. A method for data entry in keypads having at least one key, the method comprising:
a user presentation step in which a group of data entry options are presented for consideration by a user; and
a selection step in which an option is thereby selected from among the group of data entry options, the selected option corresponding to a certain data entry,
the method **characterised in that** said at least one key is moveable between at least three distinct positions
and **in that** when the switch is in a first position, the keypad device enters the user presentation step, and when the switch is in a second position, the keypad device enters the selection step.

## Patentansprüche

1. Tastatursystem (500;600;700), das eine Rückmeldungseinrichtung (508,516;608,622;708,716) und eine Tastatureinrichtung (502;602;702) umfasst, wobei die Tastatureinrichtung eine Tastatur (504;604;704) aufweist, wobei die Tastatur (504;604;704) wenigstens eine Taste (506;606;706) umfasst, welche in der Lage ist, die Tastatureinrichtung 502; 602; 702) in eine Benutzerpräsentations-Betriebsart (312,318,326;402,408) zu versetzen, in der eine Rückmeldungseinrichtung eine Gruppe von Dateneingabe-Optionen (314) präsentiert, damit diese von einem Benutzer in Erwägung gezogen werden können; und in eine Wahl-Betriebsart (320,328;404,410), in der eine Option (324) aus der Gruppe von Dateneingabe-Optionen gewählt wird, wobei die gewählte Option einer realisierbaren Dateneingabe entspricht;
wobei das Tastatursystem (500;600;700) **dadurch gekennzeichnet ist, dass** die besagte wenigstens eine Taste zwischen wenigstens drei unterschiedlichen Positionen verstellt werden kann, und dadurch, dass:
wenn sich die besagte Taste (506;606;706) in einer ersten Position befindet, das Tastatursystem (500;600;700) in die Benutzerpräsentations-Betriebsart (312,318,326;402,408) eintritt, und wenn sich die Taste in einer zweiten Position befindet, das Tastatursystem in die Wahl-Betriebsart (320,328;404,410) eintritt und infolgedessen die Rückmeldungseinrichtung die realisierbare Dateneingabe präsentiert.

2. Tastatursystem nach Anspruch 1, wobei die Rückmeldungseinrichtung (508,516;708,716) mit der Tastatureinrichtung (502;702) eine Einheit bildet.

3. Tastatursystem nach Anspruch 1, wobei die Rückmeldungseinrichtung (608,622) eine bezüglich der Tastatureinrichtung (602) externe Einrichtung ist.

4. Tastatursystem nach einem der Ansprüche 1, 2 oder 3, wobei die Rückmeldungseinrichtung eine Anzeigevorrichtung (508;608;708) umfasst.

5. Tastatursystem nach Anspruch 4, wobei die Anzeigevorrichtung eine Flüssigkristall-Anzeigevorrichtung (508;708) ist.

6. Tastatursystem nach Anspruch 4, wobei die Anzeigevorrichtung eine Kathodenstrahlröhre (620) mit einem Bildschirm ist und die Rückmeldung auf dem Bildschirm (608) angezeigt wird.

7. Tastatursystem nach einem der vorhergehenden Ansprüche, wobei die Rückmeldungseinrichtung eine Audio-Rückmeldungseinrichtung (516;622;716) umfasst.

8. Tastatursystem nach Anspruch 1, wobei die Tastatur eine Vielzahl von Tasten umfasst, wobei jede Taste aus der Vielzahl von Tasten zwischen wenigstens drei unterschiedlichen Positionen verstellt werden kann.

9. Tastatursystem nach einem der vorhergehenden Ansprüche, wobei die oder jede Taste in einer Richtung verstellbar ist, die im Wesentlichen in der Ebene der Tastatur verläuft.

10. Tastatursystem nach einem der Ansprüche 1 bis 8, wobei die oder jede Taste in einer Richtung verstellbar ist, die im Wesentlichen orthogonal zur Ebene der Tastatur ist.

11. Tastatursystem nach einem der vorhergehenden Ansprüche, wobei die oder jede Taste ein Dreistellungs-Tastschalter ist.

12. Tastatursystem nach einem der vorhergehenden Ansprüche, wobei die Wahl-Betriebsart ferner das Hervorheben einer aktuellen Option aus der Gruppe von Dateneingabe-Optionen umfasst.

13. Tastatursystem nach Anspruch 12, wobei die aktuelle Option, die hervorgehoben wird, wenn sich das Tastatursystem in der Benutzerpräsentations-Betriebsart befindet, zu der realisierbaren Option wird, die beim Eintritt in die Wahl-Betriebsart gewählt wird.

14. Tastatursystem nach einem der vorhergehenden Ansprüche, wobei die Tastatur kann als ein Tastaturteil eines berührungsempfindlichen Displays realisiert ist.

15. Verfahren zur Dateneingabe in Tastaturen mit wenigstens einer Taste, wobei das Verfahren umfasst:
einen Benutzerpräsentations-Schritt, in welchem eine Gruppe von Dateneingabe-Optionen präsentiert wird, damit diese von einem Benutzer in Erwägung gezogen werden können; und
einen Wahl-Schritt, in welchem eine Option aus der Gruppe von Dateneingabe-Optionen gewählt wird, wobei die gewählte Option einer bestimmten Dateneingabe entspricht,
wobei das Verfahren **dadurch gekennzeichnet ist, dass** die besagte wenigstens eine Taste zwischen wenigstens drei unterschiedlichen Positionen bewegt werden kann,
und dadurch, dass, wenn sich der Schalter in einer ersten Position befindet, die Tastatureinrichtung in den Benutzerpräsentations-Schritt eintritt, und wenn sich der Schalter in einer zweiten Position befindet, die Tastatureinrichtung in den Wahl-Schritt eintritt.

## Revendications

1. Système de clavier (500 ; 600 ; 700) comprenant un dispositif de réaction (508, 516 ; 608, 622 ; 708, 716) et un dispositif de clavier (502 ; 602 ; 702), le dispositif de clavier comprenant un clavier (504 ; 604 ; 704), le clavier (504 ; 604 ; 704) comprenant au moins une touche (506 ; 606 ; 706) qui peut fonctionner pour amener le dispositif de clavier (502 ; 602 ; 702) dans un mode de présentation utilisateur (312, 318, 326 ; 402, 408), un dispositif de réaction présentant un groupe d'options d'entrée de données (314) pour considération par un utilisateur ; et un mode de sélection (320, 328 ; 404, 410), une option (324) étant sélectionnée dans le groupe d'options d'entrée de données, l'option sélectionnée correspondant à une entrée de données réalisable,
le système de clavier (500, ; 600 ; 700) étant **caractérisé en ce que** ladite au moins une touche peut fonctionner entre au moins trois positions distinctes et **en ce que** :
lorsque ladite touche (506 ; 606 ; 706) est dans une première position, le système de clavier (500 ; 600 ; 700) entre le mode de présentation utilisateur (312, 318, 326 ; 402, 408), et lorsque la touche est dans une deuxième position, le système de clavier entre un mode de sélection (320, 328 ; 404, 410) et en conséquence, le dispositif de réaction présente l'entrée de données réalisable.

2. Système de clavier selon la revendication 1, dans lequel le dispositif de réaction (508, 516 ; 708, 716) est d'une seule pièce avec le dispositif de clavier (502 ; 702).

3. Système de clavier selon la revendication 1, dans lequel le dispositif de réaction (608, 622) est externe au dispositif de clavier (602).

4. Système de clavier selon l'une quelconque des revendications 1, 2 ou 3, dans lequel le dispositif de réaction comprend un dispositif d'affichage (508 ; 608 ; 708).

5. Système de clavier selon la revendication 4, dans lequel le dispositif d'affichage est un dispositif d'affichage à cristaux liquides (508 ; 708).

6. Système de clavier selon la revendication 4, dans lequel le dispositif d'affichage est un tube à rayons cathodiques (620) ayant un écran et la réaction est affichée sur l'écran (608).

7. Système de clavier selon l'une quelconque des revendications précédentes, dans lequel le dispositif de réaction comprend un dispositif de réaction audio (516 ; 622 ; 716).

8. Système de clavier selon la revendication 1, dans lequel le clavier comprend une pluralité de touches, chacune de la pluralité de touches pouvant fonctionner entre au moins trois positions distinctes.

9. Système de clavier selon l'une quelconque des revendications précédentes, dans lequel la ou chaque touche peut fonctionner dans un sens sensiblement situé dans le plan du clavier.

10. Système de clavier selon l'une quelconque des revendications 1 à 8, dans lequel la ou chaque touche peut fonctionner dans un sens sensiblement orthogonal au plan du clavier.

11. Système de clavier selon l'une quelconque des revendications précédentes, dans lequel la ou chaque touche est un commutateur de contact momentané à trois positions.

12. Système de clavier selon l'une quelconque des revendications précédentes, dans lequel le mode de sélection comprend en outre la mise en évidence d'une option en cours parmi le groupe d'options d'entrée de données.

13. Système de clavier selon la revendication 12, dans lequel l'option en cours mise en évidence lorsque le système de clavier est dans le mode de présentation utilisateur devient l'option réalisable sélectionnée lors de l'entrée dans le mode de sélection.

14. Système de clavier selon l'une quelconque des revendications précédentes, dans lequel le clavier est mis en oeuvre comme une portion de clavier d'un écran tactile.

15. Procédé pour entrer des données dans des claviers ayant au moins une touche, le procédé comprenant :
une étape de présentation utilisateur dans laquelle un groupe d'options d'entrée de données sont présentées pour considération par un utilisateur ; et
une étape de sélection dans laquelle une option est ainsi sélectionnée parmi le groupe d'options d'entrée de données, l'option sélectionnée correspondant à une certaine entrée de données,
le procédé étant **caractérisé en ce que** ladite au moins une touche est mobile entre au moins trois positions distinctes
et **en ce que** le commutateur est dans une première position, le dispositif de clavier entre l'étape de présentation utilisateur, et lorsque le commutateur est dans une deuxième position, le dispositif de clavier entre l'étape de sélection.
